# EUROPEAN PATENT APPLICATION

(11) **EP 3 217 740 A1**
(43) Date of publication of application: **13.09.2017**
(21) Application number: 17157946.9
(22) Date of filing: 24.02.2017
(51) Int. Cl.: H04W 64/00

(54) **DEVICE FOR DETERMINING INDOOR LOCATION**

(30) Priority: 09.03.2016 US 201615065053
(71) Applicant: Honeywell International Inc., Morris Plains, NJ 07950 (US)
(72) Inventor: MAHASENAN, Arun Vijayakumari, Morris Plains, NJ New Jersey 07950 (US); KULKARNI, Amit, Morris Plains, NJ New Jersey 07950 (US); PHAM, Hai, Morris Plains, NJ New Jersey 07950 (US)
(74) Representative: Houghton, Mark Phillip

(57) **Abstract**

Systems, devices, and methods for indoor location are described herein. One device includes instructions stored thereon executable by a processor to determine a first location estimate of a mobile device in a facility via a first location technique, determine a second location estimate of the mobile device in the facility via a second location technique, and determine a third location estimate based on the first and second location estimates.

## Description

### Technical Field

The present disclosure relates to systems, devices, and methods for indoor location.

### Background

Indoor location may be used to locate objects or people inside a facility and may be used for various facility systems. For example, indoor location may be used in security systems, way finding, and/or occupancy detection, among others. Indoor location may be of particular use in a facility where global positioning systems (GPS) are denied, for instance.

Previous approaches may use radio frequency (RF), infrared (IR), magnetic, or ultrasound-based technologies. Some approaches use RF fingerprinting or magnetic fingerprinting. Each of these approaches comes with advantages and drawbacks. For example, location error(s) in RF-based systems can fluctuate as people begin moving due to fading. Magnetic based-systems can face issues with initial location fixing and/or with sensor inaccuracies.

### Brief Description of the Drawings

Figure 1 illustrates a system for indoor location in accordance with one or more embodiments of the present disclosure.
Figure 2 illustrates a method for indoor location in accordance with one or more embodiments of the present disclosure.

### Detailed Description

Indoor location is described herein. For example, one or more embodiments include a non-transitory computer-readable medium having instructions stored thereon executable by a processor to determine a first location estimate of a mobile device in a facility via a first location technique, determine a second location estimate of the mobile device in the facility via a second location technique, and determine a third location estimate based on the first and second location estimates.

Embodiments of the present disclosure combine RF fingerprinting techniques with magnetic fingerprinting techniques. Embodiments herein can leverage the advantages of RF fingerprinting and the advantages of magnetic fingerprinting while reducing the shortcomings of each.

For instance, embodiments of the present disclosure can minimize effects of fluctuation(s) in RF-based systems due to fading when people begin moving. Embodiments of the present disclosure can minimize effects of initial location fixing and/or sensor inaccuracies in magnetic based-systems.

Embodiments herein can achieve a more robust location determination using information fused from both systems. Such fusion, for instance, can be accomplished by Kalman filtering techniques and/or weighted average techniques (e.g., based on the reliability of raw data, such as Received Signal Strength Indication (RSSI), sensor values, etc.).

Embodiments of the present disclosure can be used in proximity-based systems, for instance. Proximity-based systems, as referred to herein, are systems whose operations may be governed in part by the location of a person (determined based on a location of a mobile device associated with the person). Some proximity-based systems may utilize a "geofence," which may be a boundary that when crossed, activates (or deactivates) one or more aspects of the proximity-based system.

In some instances, proximity-based systems can be utilized to automate various aspects of user interaction with systems and/or devices. For example, a door can open for an authorized user when he approaches it, lights in a room can turn on or off depending on a user's presence in the room, etc.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit or digits correspond to the drawing figure number and the remaining digits identify an element or component in the drawing. As used herein, "a" or "a number of" something can refer to one or more such things. For example, "a number of embodiments" can refer to one or more embodiments.

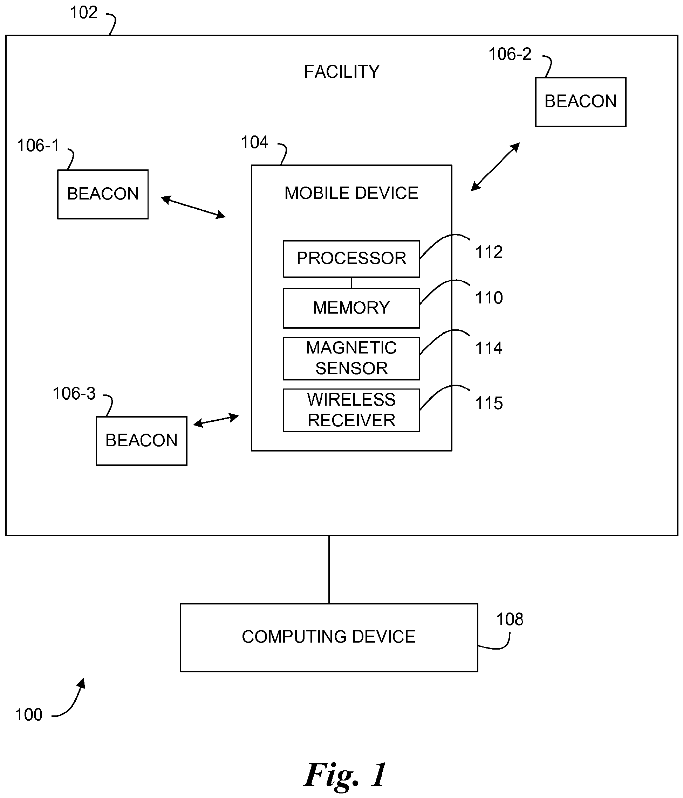

Figure 1 illustrates a system 100 for indoor location in accordance with one or more embodiments of the present disclosure. As shown in Figure 1, system 100 includes a facility 102. The facility 102 can be a building (or other structure), a subset of a building (e.g., a room), and/or another indoor location. A facility, as used herein, can refer to one or more portions of a building, a business, a home, a shopping mall, a plant, a hospital, a refinery, a school, a campus, etc.

The facility 102 can include a plurality of beacons therein. For instance, as shown in Figure 1, the facility 102 can include a beacon 106-1, a beacon 106-2, and a beacon 106-3 (collectively referred to herein as "beacons 106"). The beacons 106 are devices each positioned at a respective fixed location in the facility 102. The beacons 106 can be a device capable of wireless communication with the mobile device 104. The mobile device 104 can include a wireless receiver 115, for instance, which can scan for signals from the beacons 106. The beacons 106 can transmit a periodic or continuous wireless signal (e.g., radio signal) on one or more specified frequencies. Embodiments of the present disclosure do not limit the beacons 106 to a particular type of wireless beacon; beacons 106 can be any type of wireless beacon capable of electronic communication with a mobile device 104. Further, though three beacons 106 are shown in Figure 1, embodiments of the present disclosure are not limited to a particular number of beacons. In some embodiments, one or more of the beacons 106 may be a device, such as a television, smoke sensor, light fixture, thermostat for instance, that emits (e.g., periodically emits) an RF signal.

The beacons 106 can allow the determination of a location of the mobile device 104. For example, each of the beacons 106 can emit an RF signal determine a signal strength. The mobile device 104 can triangulate and/or trilaterate (multilaterate) a location of the mobile device 104 in the facility 102 based on received signal strength indicator (RSSI) of signals received from the beacons 106. The wireless receiver 115 of the mobile device 104 can relay information (e.g., signal strength, frequency) to a processor 112 of the mobile device 104 for location triangulation and/or trilateration, for instance. In some embodiments, the mobile device 104 can relay the information to a remote location (e.g., cloud server) which can trilaterate and/or triangulate the location and return a result to the mobile device 104.

The mobile device 104 can be a mobile computing device, for instance. The mobile device 104 can be a client device carried or worn by a user. The mobile device 104 can be carried by a user throughout various areas of the facility 102, for instance.

For example, the mobile device 104 can be a phone (e.g., smartphone), personal digital assistant (PDA), tablet, and/or wearable device (e.g., wristband, watch, necklace, ID badge, etc.). The mobile device 104 can include one or more software applications (e.g., apps) which can define and/or control communications between the mobile device 104, the computing device 108, and/or other devices (e.g., the beacons 106). Apps may be received by the mobile device 104 from the computing device 108, for instance. Apps may be launched by a user and/or responsive to some other condition (e.g., the interaction between the mobile device 104 and one or more of the beacons 106. In some embodiments, apps can be executing as background apps.

The mobile device 104 can include a magnetic field functionality. In some embodiments, for example, the mobile device 104 can include a magnetic sensor 114. In some embodiments, the magnetic sensor 114 can be activated responsive to the establishment of a wireless communication with one or more of the beacons 106, though embodiments of the present disclosure are not so limited. In some embodiments, the magnetic sensor 114 can be activated responsive to a user input, such as an input made using a touch screen display of the mobile device 104 and/or a gesture made using the mobile device 104. In some embodiments, the magnetic sensor 114 can be activated upon entering the facility 102. The magnetic sensor 114 can determine a magnetic field associated with (e.g., immediately around) the mobile device 104. The magnetic field can include a level (e.g., value and/or intensity) of the field. In some embodiments, the level of the magnetic field may be represented by Tesla units. The magnetic field can include a direction (e.g., an orientation) of the field. In some embodiments, the direction of the magnetic field may be represented by a compass heading (e.g., in degrees).

The mobile device 104 can include a memory 110 and a processor 112 configured to execute executable instructions stored in the memory 110 to perform various examples of the present disclosure, for example. That is, the memory 110 can be any type of non-transitory storage medium that can be accessed by the processor 112 to perform various examples of the present disclosure. For example, the memory 110 can be a non-transitory computer readable medium having computer readable instructions (e.g., computer program instructions) stored thereon that are executable by the processor 112.

The memory 110 can be volatile or nonvolatile memory. The memory 116 can also be removable (e.g., portable) memory, or non-removable (e.g., internal) memory. For example, the memory 116 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 110 is illustrated as being located within the mobile device 104, embodiments of the present disclosure are not so limited. For example, memory 110 can also be located internal to another computing resource (e.g., enabling computer readable instructions to be downloaded over the Internet or another wired or wireless connection). In some embodiments, the memory 110 and/or the processor 112 can be located in the computing device 108.

In addition to, or in place of, the execution of executable instructions, various examples of the present disclosure can be performed via one or more devices (e.g., one or more controllers) having logic. As used herein, "logic" is an alternative or additional processing resource to execute the actions and/or functions, etc., described herein, which includes hardware (e.g., various forms of transistor logic, application specific integrated circuits (ASICs), etc.), as opposed to computer executable instructions (e.g., software, firmware, etc.) stored in memory and executable by a processor. It is presumed that logic similarly executes instructions for purposes of the embodiments of the present disclosure.

The system 100 can include a computing device 108. Though in the example illustrated in Figure 1 the computing device 108 is shown external to the facility 102 (e.g., remote with respect to the facility 102), embodiments of the present disclosure are not so limited. In some embodiments, the computing device 108 is internal to the facility 102 (e.g., local with respect to the facility 102). Though not illustrated in Figure 1, the computing device 108 can include a memory and a processor configured to execute instructions stored on the memory. Additionally, though not illustrated, the computing device 108 can include one or more communications modules enabling communication (e.g., wired and/or wireless communication) with the beacons 106 and/or the mobile device 104. Such communication may include, but is not limited to, cellular communication, Ethernet communication, Bluetooth low energy (BLE) communication, and Wi-Fi communication.

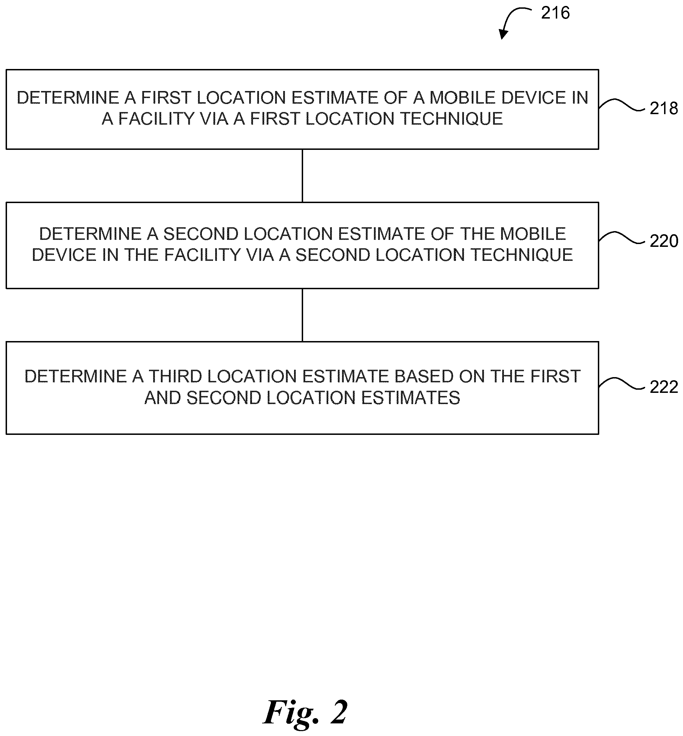

Figure 2 illustrates a method 216 for indoor location in accordance with one or more embodiments of the present disclosure. In some embodiments, the method 216 can be performed by the mobile device 104 (previously discussed in connection with Figure 1). In some embodiments, the method 216 can be performed by the computing device 108 (previously discussed in connection with Figure 1), though embodiments of the present disclosure are not so limited.

At block 218, method 216 includes determining a first location estimate of a mobile device in a facility via a first location technique. With reference to Figure 1, for instance, the first location technique can be a technique that utilizes the beacons 106 (e.g., a "signal fingerprinting technique"). In some embodiments, the beacons 106 can be used to trilaterate or multilaterate a location estimate of the mobile device in the facility.

In some embodiments, at least three beacons may be so used. It is to be understood that, generally, an increased number of beacons in communication with the mobile device yields an increased weight (or weight value) of the first location estimate. The weight, as used herein, refers to a confidence factor associated with a reliability of location estimate accuracy.

At block 220, method 216 includes determining a second location estimate of the mobile device in the facility via a second location technique. The second technique can involve the use of a sensing device, for instance. With reference to Figure 1, for instance, the second location technique can be a technique that utilizes the magnetic sensor 114 (e.g., a "magnetic fingerprinting technique").

In facilities, materials used in construction can impart variations (e.g., disturbances) in the earth's magnetic field. For example, large structural steel members can warp the geomagnetic field in a way that may be spatially variable. A magnetic sensor of a mobile device, for instance, can detect variations in the field.

Weight assigned the magnetic fingerprinting technique may be varied according to a calibration level of the magnetic sensor. In some embodiments, increased weight may be assigned when the magnetic sensor is highly calibrated (e.g., calibrated above a particular threshold), whereas decreased weight may be assigned when the magnetic sensor is less calibrated (or less accurate) (e.g., calibrated below a particular threshold).

It is noted that for each of the first and second techniques, a survey (e.g., a site survey) of the facility may be conducted to determine fingerprint data associated with the facility. Such a survey may be conducted before the beacons and/or the magnetic sensor are used to determine location estimates of the mobile device. The survey can determine (e.g., measure, acquire, detect, etc.) at multiple locations in the facility, signals from the beacons therein. At each location, the mobile device can take a plurality of measurements at a plurality of orientations to determine signal fingerprint data. In some embodiments, the survey can be conducted automatically (e.g., without user input). In some embodiments, the survey can be conducted with user input.

Additionally, the survey can determine magnetic fingerprint data associated with each location of the facility. In some embodiments, a single site survey can be conducted to determine magnetic fingerprint data associated with the facility and signal fingerprint data associated with the facility simultaneously. The magnetic and signal fingerprint data can be stored in memory (internal and/or external to the mobile device). With the magnetic fingerprint data and the signal fingerprint data for comparison, the mobile device subsequently in the building can compare its measured signal data and magnetic data with the fingerprint data to determine its location within the facility, for instance.

At block 222, method 216 includes determining a third location estimate based on the first and second location estimates. The third location estimate may be referred to as a fused location estimate. In some embodiments, the fused location estimate is determined using a Kalman filter technique applied to the signal and magnetic data determined by the mobile device (e.g., the first and second location techniques). In some embodiments, the fused location estimate is determined using a weighted average technique based on the first and second location estimates.

In some embodiments, the fused location estimate indicates a location different than a location indicated by the first location estimate and a location indicated by the second location estimate. In some embodiments, one of the first location estimate and the second location estimate (e.g., the one having a higher confidence factor and/or weight) can be selected as the fused location estimate.

Each of the first and second location estimates can be assigned a respective weight. The weights can range from 0 to 1, for instance, though embodiments herein are not so limited. In some embodiments, a weight may be sufficiently low such that a location estimate is discarded. In some embodiments, a weight may be sufficiently high such that a location estimate is used without the determination of another location estimate (i.e., a location estimate using another technique).

In some embodiments, the weight assigned can vary based on a time that the estimates are determined. For example, the first location estimate may be assigned a higher weight than the second location estimate during a period when the second location estimate is being determined. Because, for instance, magnetic location estimation may take a period of time to acquire (e.g., fix), embodiments herein can reduce a weight associated with the magnetic location estimate during this period while increasing a weight associated with the signal location estimate. Upon the fixing of the magnetic location estimate, its weight can be adaptively increased.

In some embodiments, weights assigned can vary based on movement of the mobile device. For example, while the mobile device is moving through the facility, magnetic location estimates may be more accurate than when the device is stationary. Conversely, signal location estimates may be less accurate than when the device is stationary. During periods of movement, the weight associated with the magnetic location estimate can be increased with respect to the signal location estimate. Whether the device is moving or stationary can be determined using one or more beacons, for instance, and/or other location functionalities (e.g., GPS).

Once determined, the fused location estimate can be displayed using a display device, for instance. In some embodiments, the fused location estimate can be communicated to another device and/or system. For example, the fused location estimate can be used in security systems, occupancy detection, energy control systems, way finding, indoor navigation, etc.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A mobile device (104), including:
a processor (112); and
a memory (110) configured to store instructions thereon which, when executed by a processor (112), cause the processor (112) to:
determine (218) a first location estimate of the mobile device (104) in a facility (102) via a first location technique;
determine (220) a second location estimate of the mobile device (104) in the facility (102) via a second location technique; and
determine (222) a third location estimate based on the first and second location estimates.

2. The mobile device (104) of claim 1, wherein the first location technique is a signal fingerprinting technique, and wherein the second location technique is a magnetic fingerprinting technique.

3. The mobile device (104) of claim 2, wherein the third location estimate is determined using a Kalman filter technique based on the first and second location estimates.

4. The mobile device (104) of claim 2, wherein the third location estimate is determined using a weighted average technique based on the first and second location estimates.

5. The method of claim 4, wherein the weighted average varies based on a time the first location estimate and the second location estimate are determined.

6. The method of claim 4, wherein the first location estimate has a higher weight than the second location estimate while the second location estimate is being determined.

7. The mobile device (104) of claim 1, wherein the third location estimate indicates a same location as a location indicated by one of the first and second location estimates.

8. The mobile device (104) of claim 1, wherein the third location estimate indicates a location different than a location indicated by the first location estimate and a location indicated by the second location estimate.

9. The mobile device (104) of claim 1, including instructions to:
determine a confidence factor associated with the first location estimate; and
determine a confidence factor associated with the second location estimate.

10. The mobile device (104) of claim 7, including instructions to select one of the first location estimate and the second location estimate having a higher confidence factor as the third location estimate.

11. The mobile device (104) of claim 1, further comprising:
a magnetic sensor (114); and
a wireless receiver (115);
wherein the instructions include instructions to:
determine the first location estimate of the mobile device (104) in the facility (102) based on a respective communication with at least two of a plurality of wireless beacons (106-1, 106-2, 106-3) in the facility (102);
determine the second location estimate of the mobile device (104) in the facility (102) using the magnetic sensor; and
determine the third location estimate based on the first location estimate and the second location estimate, wherein the third location estimate is a fused location estimate.

12. The mobile device (104) of claim 11, including instructions to determine the first location estimate based on a trilateration of the mobile device (104) using at least three of the wireless beacons (106-1, 106-2, 106-3).

13. The mobile device (104) of claim 11, including instructions to determine the first location estimate based on a multilateration of the mobile device (104) using at least two of the wireless beacons (106-1, 106-2, 106-3).

14. The mobile device (104) of claim 11, including instructions to vary a weight associated with the second location estimate according to a calibration level of the magnetic sensor (114).

15. The mobile device (104) of claim 11, including instructions to perform a single site survey to determine magnetic fingerprint data associated with the facility (102) and signal fingerprint data associated with the facility (102) simultaneously.
